# EUROPÄISCHE PATENTSCHRIFT

(11) **EP 0 948 172 B1**
(45) Veröffentlichungstag und Bekanntmachung des Hinweises auf die Patenterteilung: **18.08.2004**
(21) Anmeldenummer: 99106431.2
(22) Anmeldetag: 29.03.1999
(51) Int. Cl.: H04L 27/00

(54) **Verfahren zur automatischen taktfreien Erkennung von Signal-Modulationsarten**
Method of automatic, clock-free, recognition of modulation type
Procédé de réconnaissance automatique et sans horloge de type de modulation

(30) Priorität: 02.04.1998 DE 19814770
(43) Veröffentlichungstag der Anmeldung: 06.10.1999
(73) Patentinhaber: Rohde & Schwarz GmbH & Co. KG, 81671 München (DE)
(72) Erfinder: Liedtke, Ferdinand Dr.-Ing., D-53340 Meckenheim (DE)
(74) Vertreter: Graf, Walter, Dipl.-Ing.

(56) Entgegenhaltungen:
- DE-A- 2 752 468
- DE-A- 3 834 377
- DE-A- 4 243 113
- MAMMONE R J ET AL: "ESTIMATION OF CARRIER FREQUENCY, MODULATION TYPE AND BIT RATE OF AN UNKNOWN MODULATED SIGNAL" COMMUNICATIONS - SOUND TO LIGHT. SEATTLE, JUNE 7 - 10, 1987, INTERNATIONAL CONFERENCE ON COMMUNICATIONS, NEW YORK, IEEE, US, Bd. 2, Juni 1987 (1987-06), Seiten 1006-1012, XP000793539
- JOVANOVIC S D ET AL: "ON THE CLASSIFICATION OF THE MULTILEVEL PHASE SHIFT KEYING SIGNALS" SIGNAL PROCESSING THEORIES AND APPLICATIONS. BRUSSELS, AUG. 24 - 27, 1992, PROCEEDINGS OF THE EUROPEAN SIGNAL PROCESSING CONFERENCE (EUSIPCO), AMSTERDAM, ELSEVIER, NL, Bd. 3 CONF. 6, 24. August 1992 (1992-08-24), Seiten 1661-1664, XP000356565
- LIEDTKE F F: "COMPUTER SIMULATION OF AN AUTOMATIC CLASSIFICATION PROCEDURE FOR DIGITALLY MODULATED COMMUNICATION SIGNALS WITH UNKNOWN PARAMETERS" SIGNAL PROCESSING, AMSTERDAM, NL, Bd. 6, 1984, Seiten 311-323, XP000602823 ISSN: 0165-1684
- ASSALEH K ET AL: "A NEW METHOD OF MODULATION CLASSIFICATION FOR DIGITALLY MODULATED SIGNALS" COMMUNICATIONS - FUSING COMMAND, CONTROL AND INTELLIGENCE. SAN DIEGO, OCT. 11 - 14, 1992, PROCEEDINGS OF THE MILITARY COMMUNICATIONS CONFERENCE (MILCOM), NEW YORK, IEEE, US, Bd. 2 CONF. 11, 11. Oktober 1992 (1992-10-11), Seiten 712-716, XP000346679 ISBN: 0-7803-0586-8

## Beschreibung

Die Erfindung betrifft ein Verfahren zur automatischen Erkennung von Signal-Modulationsarten nach dem Oberbegriff des Anspruchs 1.

Zur Überwachung des Kommunikations-Funkverkehrs, z. B. durch die Post, ist es erforderlich, Signalaussendungen schnell zu erkennen und deren Modulationsparameter wie Anzahlen und Positionen der vorkommenden Amplituden-, Frequenz- und Phasenzustände und, bei digital modulierten Signalen, die Schrittgeschwindigkeit zu ermitteln.

Bei den Modulationsarten ist zwischen den kontinuierlich (analog) und den diskret (digital) modulierten Typen zu unterscheiden. In modernen Kommunikationssystemen sind die Primär-Modulationsarten heute überwiegend digital. Bei vielen digitalen Modulationsarten kann auch ohne genaue Kenntnis der Modulationsparameter relativ einfach aus dem Signal der Schrittakt zurückgewonnen und zur weiteren Signalanalyse verwendet werden. Insbesondere durch Extraktion der zum Signal synchronen Schrittaktzeitpunkte wird das Auffinden der für die Modulationsarten typischen Verteilungen der Amplituden-, Momentanfrequenz- und Phasenwerte erleichtert. Das bedeutet eine vorteilhafte Unterdrückung der nicht relevanten Werte und damit eine Leistungssteigerung und eine erhebliche Datenreduktion für die nachfolgende Signalverarbeitung. Ein Beispiel für ein solches, taktgebundenes Verfahren ist in [1] beschrieben. Solche Verfahren nutzen den engen Zusammenhang von Signalbandbreite und Schrittgeschwindigkeit.

Wenn die zu analysierenden Signale keinen oder keinen eindeutigen Schrittakt erkennen lassen oder der enge Zusammenhang zwischen Signalbandbreite und Schrittakt nicht mehr gegeben ist, versagen taktgebundene Verfahren.

Taktfrei sind analog modulierte Signale und bestimmte Testsignale, wie z. B. linear frequenzmodulierte Signale zum Prüfen von Kurzwellen-Funkkanälen. Weiterhin gibt es digitale Modulationsarten, bei denen durch entsprechende Pulsformungen die eigentlich diskreten Wertebereiche wieder weitgehend kontinuierlich gemacht werden. Zusätzlich sind bei einigen Modulationsarten auch die Inphasen- und Quadraturkomponenten gegeneinander versetzt, so daß hierfür spezielle zusätzliche Taktableitungen erforderlich wären. Dies gilt beispielsweise für CPM-Signale (CPM: Continuous Phase Modulation) [2]. Die aus dem Mobilfunk bekannte Modulationsart GMSK (GMSK: Gaussian Minimum-Shift Keying) gehört dazu [3].

Der Erfindung liegt die Aufgabe zugrunde, Funksignale unabhängig von ihrer Modulationsart und ohne Benutzung von gegebenenfalls zugeordneten Schrittaktzeitpunkten, d. h. taktfrei, mit einem allgemein gültigen Verfahren automatisch erkennen und nach ihrer Modulationsart klassifizieren zu können. Wesentlich dabei ist die Einheitlichkeit des Verfahrens für alle zu erkennenden Funksignale. Das Verfahren soll außerdem besonders robust sein und die zur Erkennung verwendeten Referenzfunktionen im Rahmen einer Lernphase [4] adaptiv und schnell aus neuen Signalsituationen generieren. Robust ist in dem Sinne gemeint, daß das Verfahren auch bei zunehmenden Signalstörungen noch weitgehend wahre Ergebnisse liefert. Um dabei die Leistungsfähigkeit von taktgebundenen Verfahren zu erreichen, ist es angezeigt, die relevanten Signal-Parameterwerte auch ohne Kenntnis der genauen Schrittaktzeitpunkte zu finden und die Weiterverarbeitung auf diese Werte zu stützen.

Erfindungsgemäß wird die gestellte Aufgabe, ausgehend von einem Verfahren gemäß Oberbegriff des Anspruchs 1, durch die im Kennzeichen des Anspruchs 1 angegebenen Merkmale gelöst. Vorteilhafte Ausgestaltungen und Weiterbildungen des Gegenstandes der Erfindung sind in den Unteransprüchen 2 bis 6 angegeben.

Die Erfindung wird im folgenden zunächst allgemein und dann anhand eines Ausführungbeispiels näher erläutert.

Das eingehende Funksignal wird in bekannter Weise zunächst abgemischt und mit Hilfe eines Analog-Digital-Wandlers digitalisiert. Der für die Modulationsartenerkennung interessierende Frequenzbandanteil kann beispielsweise durch die in [5] beschriebene Anordnung, einen spektralen Segmentierer, automatisch nach den Parametern Mittenfrequenz und Bandbreite vermessen werden. Nachfolgend wird das zu analysierende Signal durch Abmischung in das Basisband und Ausfilterung gewonnen. Die Grenzfrequenz des verwendeten Tiefpaßfilters richtet sich dabei nach der vorher gemessenen Signalbandbreite. Zur weiteren Verarbeitung stehen damit die Komponenten des komplexen Basisbandsignals zur Verfügung. Die an dieser Stelle vorliegende Abtastfrequenz fₛ soll mindestens den Wert der achtfachen Signalbandbreite B haben, d.h. fₛ = 1/Δt >= 8*B.

Zunächst durchläuft das komplexe Signal in parallelen Zweigen nichtlineare Operationen, eine Quadratbildung und eine Betragsquadratbildung, mit jeweils anschließender DFT (DFT: Digitale Fourier-Transformation) [6] zur Feststellung, ob und wenn ja, bei welcher Frequenz ein Schrittakt-Spektralanteil erkannt werden kann. Eine Erkennung erfolgt, wenn ein vorher festgelegter Detektionsschwellenwert überschritten wird. So liefern CPM-Signale hinter der Quadratbildung des komplexen Signals eine ausgebildete Spektrallinie bei der halben Schrittaktfrequenz und einfache digital modulierte Signale liefern hinter der Betragsquadratbildung eine ausgebildete Spektrallinie bei der vollen Schrittaktfrequenz. Aus dem Kehrwert der Frequenz des erkannten Schrittakt-Spektralanteils wird das Zeitintervall für die später benötigte Differenzphasenbildung bestimmt und abgespeichert. Die Größe einer gegebenenfalls vorhandenen Schrittakt-Spektrallinie und deren Frequenzwert werden außerdem für die später zu fällende Modulationsartenentscheidung zwischengespeichert. Wenn kein deutlicher Schrittakt-Spektralanteil vorhanden ist, wird das für die spätere Differenzphasenbildung benötigte Zeitintervall aus dem Kehrwert der bekannten Signalbandbreite bestimmt. Dagegen wird der Schrittakt-Spektralanteil nicht für die Generierung der Schrittaktzeitpunkte zur Auswahl von relevanten Signal-Parameterwerten benötigt, weil es sich bei dem erfindungsgemäßen Verfahren um ein taktfreies Verfahren zur Modulationsartenerkennung handelt. Dies ist bezüglich des Aufwands, der robusten Arbeitsweise und der vielseitigen Einsetzbarkeit vorteilhaft gegenüber taktgebundenen Verfahren. Die Extraktion der relevanten Signal-Parameterwerte wird hier nach einer speziellen, unten näher erläuterten Methode vorgenommen.

In einem parallelen Funktionszweig zum oben beschriebenen, wird das komplexe Basisbandsignal von kartesischen in Polarkoordinaten transformiert, d. h. für die Wertefolgen von Real- und Imaginärteil werden Wertefolgen für die Amplitude a und die Phase ϕ bestimmt. Aus dem zeitlichen Verlauf der so bestimmten Wertefolgen für die Amplitude, aᵢ, und für die Phase, ϕᵢ, lassen sich alle weiteren, für die automatische Modulationsartenerkennung notwendigen Parameter herleiten. Der Index i bezeichnet den Laufindex für die betreffende Wertefolge. Für die Modulationsartenerkennung empfiehlt sich eine abschnittsweise Signalverarbeitung, wobei die gewählte Abschnittslänge nicht größer sein soll, als die Länge des zu analysierenden Signals. So kann die Abschnittslänge beispielsweise 2048 Signal-Abtastwerte umfassen; für den Laufindex i gilt dann 1<= i <=2048.

Für die Durchführung der erfindungsgemäßen Überwachungsaufgabe mit den zunächst unbekannten Signalparametern ist es nicht sinnvoll, mit absoluten Phasenwerten zu arbeiten. In diesem Fall kann bereits eine leichte Frequenzverstimmung die wesentlichen Informationen in den Phasenwerten verdecken. Es ist deswegen vorgesehen, Differenzphasenwerte Dϕᵢ = ϕᵢ - ϕ_{i-I} zu bestimmen und weiter zu bearbeiten. Das für die Differenzbildung notwendige Zeitintervall T = I*Δt wird aus dem Kehrwert der gegebenenfalls erkannten Schrittaktfrequenz oder alternativ aus dem Kehrwert der bereits bekannten Signalbandbreite bestimmt. Weiterhin wird durch Differentiation des zeitlichen Phasenverlaufes die Wertefolge der Momentanfrequenz, fᵢ, gewonnen. Im folgenden wird die Momentanfrequenz abkürzend mit Frequenz bezeichnet. Für die Erkennung bestimmter Frequenzmodulationen, wie beispielsweise linear frequenzmodulierte Signale, wird außerdem die Wertefolge der Frequenzableitung, dfᵢ, benötigt. Sie wird durch Differentiation des zeitlichen Frequenzverlaufes gewonnen. Alle Differentiationen können rechentechnisch einfach mit Hilfe von Digitalfitern angenähert werden [7]. Damit die Wertefolgen für die vier Parameter zeitsynchron vorliegen, müssen die sich durch die Differenzbildung und Differentiationen ergebenden Zeitverzögerungen wieder ausgeglichen werden. Die so hergeleiteten Wertefolgen aᵢ, Dϕᵢ, fᵢ und dfᵢ bilden die Grundlage für die im folgenden beschriebenen Verfahrensschritte zur Extraktion der relevanten Parameterwerte, d. h. zur Merkmalsextraktion.

Für die Erkennung der Modulationsart werden jeweils die Werte herangezogen, deren Ableitungswerte nahe dem Ableitungsmittelwert für den betrachteten Signalabschnitt liegen. Es sind daher zu den vier Parameter-Wertefolgen die Wertefolgen der Ableitungen zu bestimmen. Zusätzlich zu den bereits vorliegenden Wertefolgen müssen dafür noch die Ableitungen von aᵢ und von dfᵢ gewonnen werden. Diese Wertefolgen werden mit daᵢ und ddfᵢ bezeichnet. Von daᵢ, fᵢ, dfᵢ und ddfᵢ werden die Grenzwerte bestimmt, innerhalb derer X % der Werte der jeweiligen Ableitungswertefolge enthalten sind. Bei Verwendung der Abtastfrequenz von der achtfachen Signalbandreite hat sich für X der Bereich 25<=X<=37.5 % bewährt. Zu den Zeitpunkten, zu denen daᵢ, dfᵢ und ddfᵢ innerhalb der jeweiligen Grenzwerte liegen, werden die zeitlich dazugehörigen Größen für aᵢ, fᵢ und dfᵢ extrahiert. Zur Auswahl der Dϕᵢ-Werte werden die Größen fᵢ und fᵢ₋₁ auf gleichzeitige Einhaltung der Grenzwerte geprüft. Durch die Prüfung der jeweiligen Ableitungswerte werden die Parameterwerte zu den Zeitpunkten gewonnen, an denen jeweils eingeschwungene Zustände erreicht und damit die Parameterwerte relevant sind. Gleichzeitig ist, abhängig von dem gewählten Wert für X, eine Datenreduktion um etwa den Faktor 3 bis 4 möglich. Die Gewinnung und Weiterverarbeitung nur der relevanten Parameterwerte ist für die Qualität des Erkennungsverfahrens entscheident. Das bedeutet, daß solche Erkennungsverfahren, die, taktgebunden oder taktfrei, nicht die relevanten Signal-Parameterwerte extrahieren, Nachteile hinsichtlich des Realisierungsaufwands oder hinsichtlich ihrer Leistungsfähigkeit haben.

Für die weitere Verarbeitung werden für die extrahierten Werte von a, Dϕ, f, und df Histogramme angelegt. Dazu sind zunächst die Wertebereiche von a, f und df geeignet zu normieren, während sich für Dϕ der feste Wertebereich von -π bis +π anbietet. Für a wird die Standardabweichung σ bestimmt und für das Histogramm der Wertebereich von 0 bis 4*σ gewählt. Hierbei ist berücksichtigt, daß für die Amplitude a nur Werte >= 0 zugelassen sind. Für f und df wird jeweils der Mittelwert µ und die Standardabweichung σ bestimmt und die Histogramm-Wertebereiche jeweils von (µ - 2*σ) bis (µ + 2*σ) festgelegt. Für die Histogramm-Intervallanzahlen haben sich für a, f und df 32 Intervalle und für Dϕ 64 Intervalle bewährt. In den so angelegten Histogrammen zeichnen sich die verschiedenen Modulationsarten deutlich ab und können nach geeigneter Histogrammauswertung automatisch klassifiziert werden. Zur Absicherung der Modulationsartenentscheidung werden außerdem die Anzahlen, die Mittelwerte und die Standardabweichungen der extrahierten Werte gegen vorgegebene Grenzwerte verglichen.

Die Histogramme könnten gegen solche Histogramme verglichen werden, wie sie sich typisch für die gesuchten Modulationsarten ergeben. Anstelle des direkten Vergleichs wird hier die Verarbeitung nach zuvor durchgeführter DFT mit nachfolgender Betragsbildung vorgezogen. Die so gewonnenen Bildfunktionen sind als grobe Schätzungen der Beträge der Charakteristischen Funktionen [8] anzusehen. Durch diese Transformation wird die wesentliche Histogramminformation im Originalbereich auf relativ wenige Werte im sogenannten Bildbereich komprimiert. So kann man die jeweiligen modulationstypischen charakteristischen Eigenheiten der Histogramme mit einer um rund 70 % reduzierten Werteanzahl noch sehr gut beschreiben. Zur Charakterisierung der Histogramme für a, f und df reichen nach eigenen Versuchen die ersten 10 Werte und für das Dϕ-Histogramm, die ersten 20 Werte im Bildbereich voll aus. Der Histogrammvergleich wird damit ersetzt durch einen Vergleich der mittels DFT transformierten Histogramme, d. h. Ausschnitte der Bildfunktionen werden miteinander verglichen. Der Vergleich selbst erfolgt durch Korrelation der jeweils vorher abgespeicherten bzw. aus Referenzsignalen erlernten Referenzfunktionen mit den Bildfunktionsausschnitten, die für den aktuell anliegenden Signalabschnitt bestimmt wurden. Alternativ kann der Vergleich auch mit der Methode der kleinsten quadratischen Abweichung durchgeführt werden. Vor dem Vergleich müssen die zu vergleichenden Funktionen normiert werden. Hier hat sich die Normierung auf den gleichen Energiewert, z. B. auf den Wert eins, ohne Berücksichtigung des jeweils ersten, den Gleichanteil beschreibenden Koeffizienten, bewährt. Mit Energiewert ist der Wert der Summe der quadrierten Werte gemeint.

Wenn zusätzlich zu den Beträgen der Bildfunktionsausschnitte auch noch deren Phasenwerte für den Mustervergleich herangezogen werden, kann, bei erhöhtem Rechenaufwand, die Erkennungsleistung insbesondere für solche Modulationsarten, die sich im wesentlichen nur durch verschobene Zustandsverteilungen unterscheiden, noch verbessert werden.

Für das Lernen, d. h. für die adaptive Generierung von Referenzfunktionen, werden möglichst mehrere Signalabschnitte beobachtet und die darin enthaltenen relevanten Werte für a, Dϕ, f und df akkumuliert. Die Werteakkumulation über mehrere Signalabschnitte hinweg führt i. allg. zu glatteren und vertrauenswürdigeren Histogrammen. Nach Beendigung der Signalaufnahme werden die Wertebereiche normiert und die vier Histogramme so angelegt, wie schon für das Einzelexperiment beschrieben wurde. Nachfolgend werden sie mit Hilfe der DFT in den Bildbereich transformiert. Von den Bildbereichsfunktionswerten werden jeweils nur die ersten rund 30 % weiterverarbeitet. Nach Normierung werden sie als Referenzfunktionen abgelegt. Für alle interessierenden Modulationsarten werden so die entsprechenden modulationstypischen Referenzfunktionen bestimmt und abgespeichert. Weiterhin werden aus den Lernstichproben Referenzwerte für einen gegebenenfalls vorhandenen Taktschwingungsanteil und für die Werteanzahlen, die Mittelwerte und Standardabweichungen der relevanten Werte für a, Dϕ, f und df gewonnen und abgespeichert. Die dafür notwendigen Signalabschnitte mit den verschiedenen Modulationsarten können aus entsprechenden Signalgeneratoren oder auch aus den mit dem Funküberwachungssystem empfangenen Signalen selbst gewonnen werden. Alternativ oder zusätzlich zu den gelernten Referenzfunktionen können auch vorgegebene Referenzfunktionen abgespeichert und zum Vergleich herangezogen werden.

Nach Abschluß der Lernphase beginnt die Arbeitsphase. In dieser Phase werden fortlaufend interessierende Signalsegmente analysiert, wie es verfahrensmäßig zur Ermittlung der Wertefolgen aᵢ, Dϕᵢ, fᵢ und dfᵢ angegeben und oben beschrieben worden ist. Die sich für die transformierten Histogramme ergebenden Bildfunktionsausschnitte werden normiert und mit allen abgelegten Referenzfunktionen korreliert oder nach der Methode der kleinsten quadratischen Abweichung miteinander verglichen. Überschreiten die Korrelationsergebnisse oder unterschreiten die quadratischen Abweichungen für bestimmte Referenzfunktionen vorgegebene Entscheidungsschwellenwerte, deutet das auf das Vorliegen der entsprechend zugeordneten Modulationsart hin. Wenn zusätzlich die Anzahlen, die Mittelwerte und die Standardabweichungen der relevanten Werte der vier Parameter innerhalb vorgegebener Toleranzbereiche liegen, wird daraus auf das Vorliegen der entsprechenden Modulationsart geschlossen. Die Größen der vorzugebenden Entscheidungsschwellenwerte und der Toleranzbereiche hängen von den geforderten Werten für die Erkennungsraten und Falschalarmraten ab. Die Entscheidungsfindung für digitale Modulationsarten erhält eine Unterstützung dadurch, daß nach einer der eingangsseitigen nichtlinearen Operationen mit anschließender DFT die zum Signal gehörige Schrittakt-Spektrallinie entdeckt wird.

Die mit der Erfindung erzielbaren Vorteile bestehen inbesondere darin, daß die Erkennung von analogen und digitalen Modulationsarten automatisch, schnell und robust erfolgt. Erfindungsgemäß ist zur Merkmalsextraktion keine Rückgewinnung der gegebenenfalls im Signal enthaltenen, genauen Schrittaktzeitpunkte erforderlich. Dennoch wird durch eine spezielle taktfreie Extraktion der relevanten Parameterwerte eine gute Erkennungsleistung erreicht. Weiterhin sind die für die Erkennung notwendigen Referenzfunktionen im Rahmen einer Lernphase adaptiv aus nur wenigen Lernstichproben bestimmbar.

Die Realisierung des Verfahrens ist mit standardisierten Rechenbausteinen, den Digitalen Signal-Prozessoren möglich. Bei weniger hohen zeitlichen Anforderungen kann das beschriebene algorithmische Verfahren auch auf jeder Rechnerplattform, beispielsweise auf einem Personal Computer, in einer höheren Programmiersprache realisiert werden.

Zu dem beschriebenen Verfahren lassen sich auch Varianten vorstellen. So könnten für die Verarbeitung der Parameterhistogramme auch andere bekannte Transformationen, wie beispielsweise die in der Bildverarbeitung bewährte Cosinus-Transformation [9] als Näherung zur optimalen Karhunen-Loêve-Transformation [9], gute Ergebnisse bringen.

Weiterhin ist eine Auswertung der sich nach der Transformation ergebenden Bildfunktionswerte mit einer nichtparametrischen Bewertungsmethode denkbar. Neben dem in der Mustererkennung bewährten Nächster-Nachbar-Klassifikator [4] kommen dafür auch das Künstliche Neuronale Netz [10], ein Entscheidungsnetzwerk mit Fuzzy-Logik [10] oder eine Kombination aus Künstlichem Neuronalen Netz und Fuzzy-Logik [10] in Frage.

Neben der Betriebsart mit von außen nicht einsehbarem vollautomatischem Ablauf ist es möglich, dem Anwender zusätzlich wichtige Zwischenergebnisse, z. B. die Merkmalshistogramme oder die daraus gewonnenen Bildfunktionen oder Bildfunktionsausschnitte, zur Beurteilung optisch anzuzeigen. Hiermit kann anschaulich der Ablauf der Modulationsartenerkennung verfolgt und gegebenenfalls durch Parameterveränderung variiert werden.

Die zeitliche Trennung von vorangehender einmaliger Lernphase und nachfolgender Arbeitsphase ist nicht immer optimal. So wird es sich insbesondere bei zeitlich variierenden Verhältnissen empfehlen, die Arbeitsphase abschnittsweise durch Lernphasen zu unterbrechen.

Denkbar ist weiterhin, daß für das beschriebene Verfahren nicht nur die in der Lernphase gewonnenen, sondern auch fest vorgegebene Referenzfunktionen für die Modulationsartenerkennung herangezogen werden. Diese Referenzfunktionen könnten beispielsweise aus theoretischen Überlegungen hergeleitet sein. Auch die ausschließliche Verwendung von fest vorgegebenen Referenzfunktionen ist denkbar.

Ein Ausführungsbeispiel des Verfahrens wird in den Abbildungen 1 bis 4 näher erläutert.

Dabei zeigt die
- Abbildung 1: die Stufen der Signalanalyse mit Modulationsartenerkenner,
- Abbildung 2: die Funktion des lernenden Modulationsartenerkenners mit taktfreier Mermalsextraktion,
- Abbildung 3: einen erfindungsgemäßen taktfreien Merkmalsextraktor,
- Abbildung 4: eine adaptive Referenzfunktions-Bildung mit Korrelation.

Im folgenden werden die Abbildungen im einzelnen beschrieben.

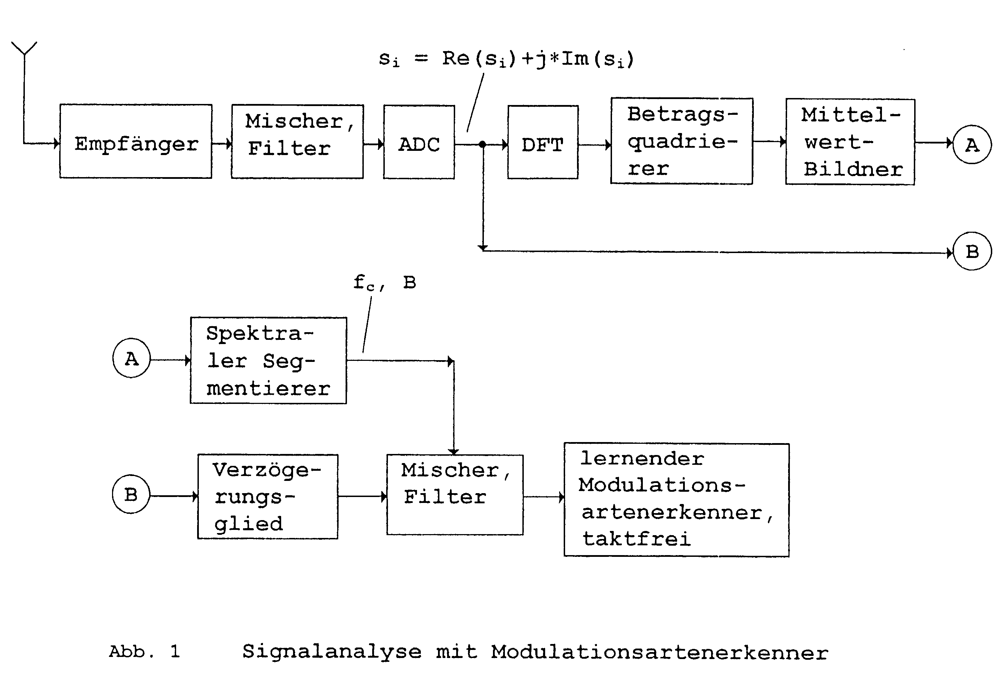

Gemäß Abb. 1 durchläuft das zu analysierende Funksignal den Empfangszweig mit **Empfänger, Mischer, Filter** und dem **ADC** (ADC: Analog Digital Converter). Am Ausgang des Empfangsteils steht das digitalisierte komplexe Signal sᵢ = Re(sᵢ) + j*Im(sᵢ) zur weiteren Bearbeitung zur Verfügung. Re steht als Abkürzung für Realteil, Im ist diejenige für den Imaginärteil und i ist der zeitliche Laufindex. Im weiteren Verlauf wird im oberen Zweig die zur Modulationsartenerkennung erforderliche vorbereitende Signalverarbeitung durchgeführt. Zunächst wird von einem gewählten Signalabschnitt im **DFT**-Baustein die DFT berechnet. Anschließend werden im **Betragsquadrierer** die Betragsquadrate bestimmt. Bei Verfügbarkeit von mehreren Signalabschnitten erfolgt für die Einzelergebnisse im nachfolgenden **Mittelwert-Bildner** eine Mittelung. Der anschließende **Spektrale Segmentierer** [5] ermittelt für alle signifikanten Spektralanteile jeweils die Mittenfrequenz f_{c} und die Bandbreite B. Mit diesen Informationen kann das auf dem unteren Verarbeitungsweg im **Verzögerungsglied** entsprechend verzögerte Signal im Block **Mischer, Filter** bezüglich Mittenfrequenz und Bandbreite so vorbereitet werden, daß der anschließende **Modulationsartenerkenner** nur das interessierende schmalbandige, komplexe Signal im Basisband angeboten bekommt.

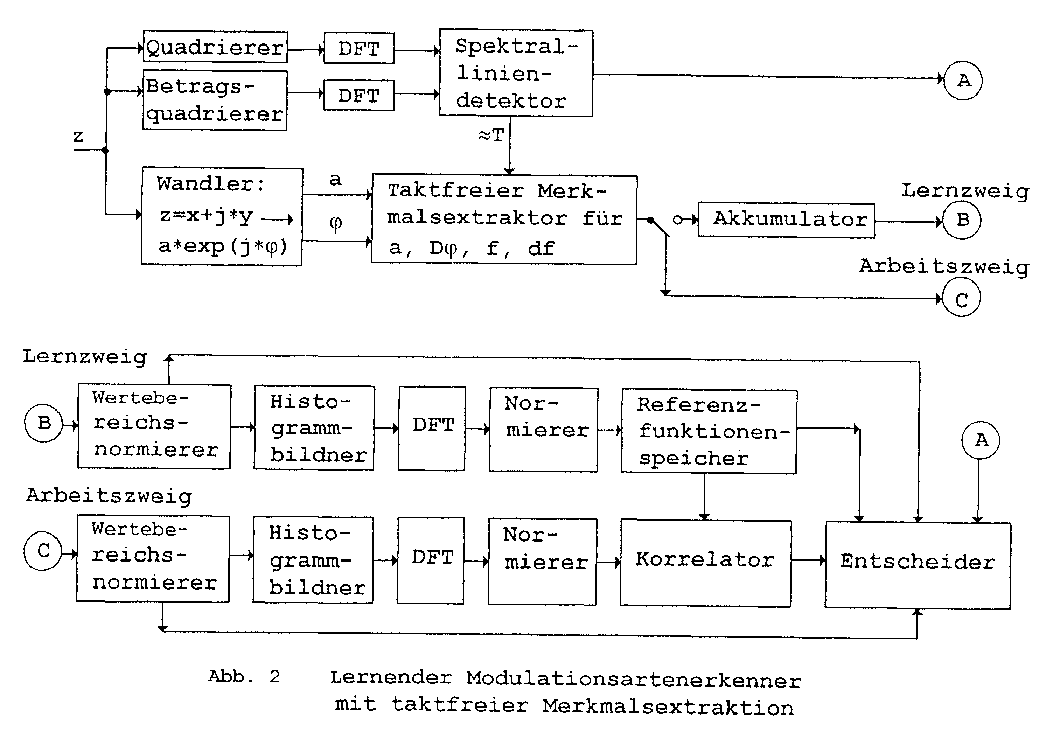

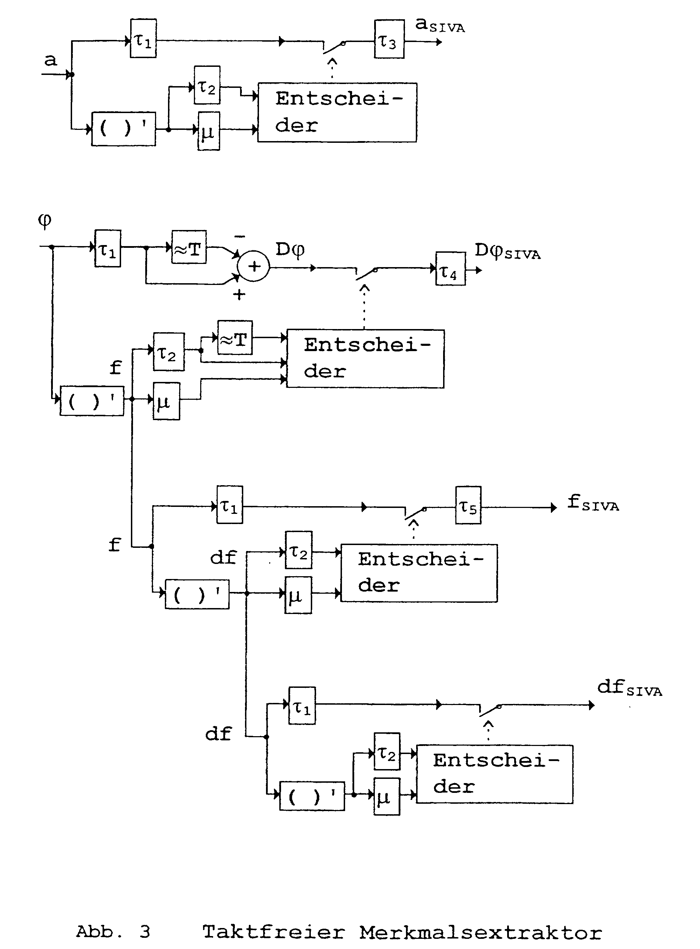

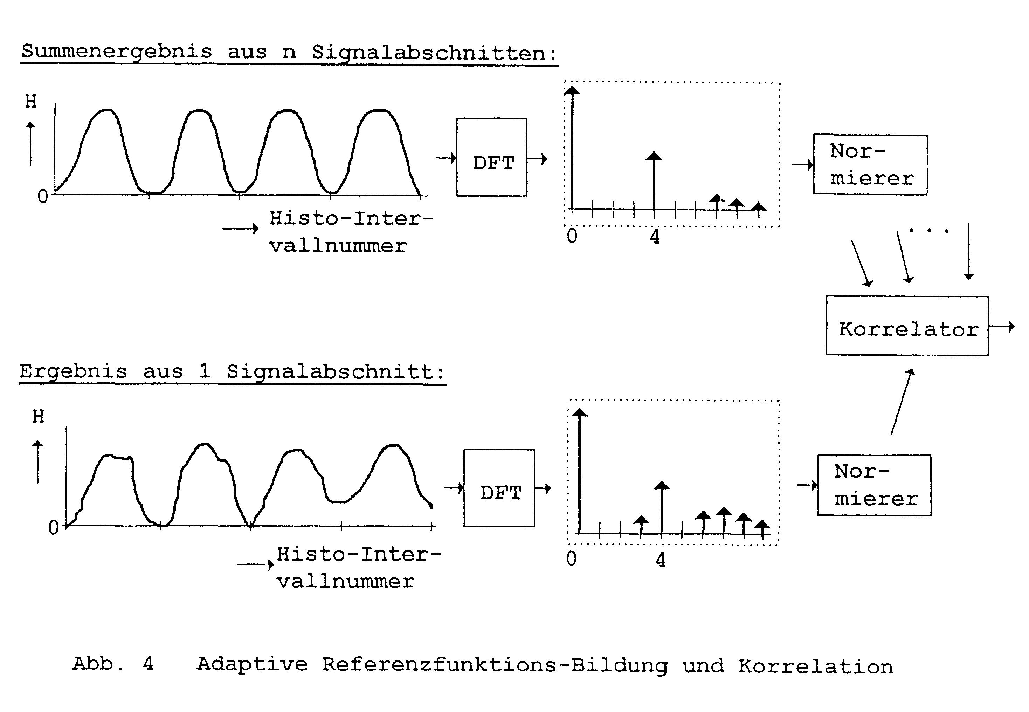

In Abb. 2 ist der lernende Modulationsartenerkenner mit taktfreier Merkmalsextraktion dargestellt. Das am Eingang des Modulationsartenerkenners anstehende schmalbandige, komplexe Signal ist mit z = x + j*y bezeichnet. Im oberen Abbildungsteil wird mit Hilfe der beiden Nichtlinearitäten, **Quadrierer** und **Betragsquadrierer,** mit jeweils anschließendem **DFT**-Baustein in dem **Spektralliniendetektor** eine gegebenenfalls vorhandene Schrittakt-Spektrallinie entdeckt und daraus das Schrittakt-Zeitintervall T geschätzt. Im unteren Zweig des oberen Bildteils wird in dem **Wandler** die Koordinatentransformation von kartesischen in die Polarkoordinaten a und ϕ durchgeführt. Der **Taktfreie Merkmalsextraktor** bestimmt zunächst die noch fehlenden Wertefolgen für Dϕ, f, df, da und ddf. Für die jetzt vorliegenden Wertefolgen der Parameter a, Dϕ, f und df werden mittels Untersuchung der jeweiligen Ableitungswertefolge die relevanten Werte extrahiert. Der Merkmalsextraktor wird genauer in Abb. 3 gezeigt und im nächsten Abschnitt beschrieben. Der Umschalter hinter dem **Taktfreien Merkmalsextraktor** wird für die Lernphase des Modulationsartenerkenners nach oben gelegt, so daß der Lernzweig aktiviert ist. Im **Akkumulator** werden die relevanten Merkmalswerte akkumuliert und dann im **Wertebereichsnormierer** im Hinblick auf den nachfolgenden **Histogrammbildner** bezüglich der Abszissenbereiche normiert. Im **Histogrammbildner** werden Histogramme für die Parameter a, Dϕ, f und df angelegt. Im nachfolgenden Block **DFT** werden die Histogramme vom Original- in den Bildbereich transformiert und nur die ersten rund 30 % der Werte weiter verwendet. Die restlichen Bildbereichswerte werden nicht benötigt. Im Block **Normierer** werden die Bildbereichsergebnisse ohne Berücksichtigung des jeweils ersten Wertes bezüglich der Ordinatenbereiche normiert, und im **Referenzfunktionenspeicher** die sich jeweils ergebenden normierten Bildbereichswerte als Referenzfunktionen abgespeichert. Nach Beendigung der Lernphase wird mit Umlegen des Schalters hinter dem **Taktfreien Merkmalsextraktor** die Arbeitsphase eingeleitet. Die automatisch zu analysierenden Signalabschnitte durchlaufen in dieser Phase bis einschließlich zum **Normierer** die gleichen Funktionsblöcke wie diejenigen, die bereits für die Lernphase beschrieben wurden. Die sich hinter dem **Normierer** ergebenden Bildfunktionsauschnitte werden im **Korrelator** mit den abgespeicherten Referenzfunktionen korreliert. Details zur Generierung und Verwendung der Referenzfunktionen werden in der Abb. 4 dargestellt und unten beschrieben. In dem nach dem **Korrelator** angeordneten **Entscheider** werden die folgenden Größen zur Entscheidungsfindung eingegeben: die Korrelationsergebnisse, die Anzahlen, die Mittelwerte und die Standardabweichungen der als relevant erkannten Parameterwerte aus den **Wertebereichsnormierern** und gegebenenfalls Frequenzwert und Leistungswert einer im **Spektralliniendetektor** detektierten Schrittakt-Spektrallinie. Aus diesen Parametern wird durch Vergleich mit vorgegebenen Schwellenwerten die Modulationsartenentscheidung getroffen.und zur Anzeige gebracht bzw. an nachfolgende, auf des Ergebnis angewiesene Baugruppen gegeben.

Abb. 3 zeigt den prinzipiellen Aufbau des Taktfreien Merkmalsextraktors. Im oberen Bildteil ist die Extraktion der relevanten Werte a_{SIVA} (SIVA: Significant Values) für die Amplitude a dargestellt. Im mit **( )'** bezeichneten Funktionselement wird die Ableitung und im mit **µ** bezeichneten Element wird der Mittelwert der Ableitungswertefolge für den betrachteten Signalabschnitt geschätzt. Die mit τ₁ und τ₂ bezeichneten Elemente gleichen die Laufzeitunterschiede in den Parallelzweigen aus. Der **Entscheider** prüft die Größe der Abweichung zwischen dem Mittelwert und dem Augenblickswert der abgeleiteten Wertefolge und schließt bei geringer Abweichung den Schalter im oberen Signalweg. Die für die Entscheidung notwendigen Grenzwerte werden dem **Entscheider** vorgegeben. Der **Entscheider** wählt danach die relevanten Amplitudenwerte a_{SIVA} aus. Das mit τ₃ bezeichnete Funktionselement ist dazu vorgesehen, den Laufzeitunterschied zu der im unteren Bildteil gezeigten Anordnung auszugleichen.

Der untere Bildteil der Abb. 3 erklärt die Extraktion der relevanten Werte für die aus der Phase ϕ abgeleiteten Größen Dϕ, f und df. Aus den Phasenwerten werden mit Hilfe des mit **≈T** bezeichneten Verzögerungsglieds und einem Addierer die Differenzphasenwerte Differenzphasenwerte Dϕ bestimmt. Der Addierer ist mit dem Symbol + gekennzeichnet. Von den Differenzphasenwerten werden vom **Entscheider** nur diejenigen als relevant ausgewählt, für die die zeitlich entsprechenden Augenblickswerte der Ableitung f nur gering vom Ableitungsmittelwert abweichen. Bis auf die Differenzbildung ist die Extraktion der relevanten Differenzphasenwerte Dϕ_{SIVA} prinzipiell identisch mit der Extraktion von a_{SIVA}. Die in Abb. 3 unten dargestellte Gewinnung von f_{SIVA} und df_{SIVA} erfolgt jeweils nach demselben Schema wie die Extraktion von a_{SIVA} Die mit τ₄ und τ₅ bezeichneten Funktionselemente dienen dem Laufzeitausgleich, so daß alle vier Wertefolgen, die für a_{SIVA}, Dϕ_{SIVA}, f_{SIVA} und df_{SIVA}, zeitgleich zur Weiterverarbeitung verfügbar sind.

Abb. 4 zeigt das Prinzip der Verarbeitung der Merkmalshistogramme für a_{SIVA}, Dϕ_{SIVA}, f_{SIVA} und df_{SIVA}. Für die Abbildung wurde angenommen, daß das beispielhaft betrachtete Merkmal vier relevante Wertezustände aufweist. Im oberen Abbildungsteil ist das Merkmalsbistogramm für alle Werte aus n Signalabschnitten dargestellt, wobei hier n >1 angenommen wurde. H bezeichnet die Abkürzung für Häufigkeit und Histo diejenige für Histogramm. Ein solches, relativ glattes Histogramm ergibt sich im Rahmen der Lernphase des Modulationsartenerkenners. Die vier relevanten Wertezustände zeichnen sich deutlich ab. Mit Hilfe der nachfolgenden **DFT** ergeben sich im Bildbereich für die Beträge die charakteristischen, im rechten oberen Abbildungsteil dargestellten Linien. Die Linie beim Abszissenwert 0 entspricht der Summenhäufigkeit, die für die nachfolgende Korrelation nicht herangezogen wird. Die Linie beim Abszissenwert 4 ist diejenige, die die Einhüllende des zugrunde liegende Histogramms im wesentlichen beschreibt. Die kleineren Linien sind ein Maß für die Abweichung der Histogrammeinhüllenden von einer Sinusschwingung. Bei einem zugrunde liegenden Histogramm mit beispielsweise 32 Histogrammintervallen reichen die gestrichelt eingerahmten 10 Linien für die genügend genaue Histogrammcharakterisierung aus. Für die Korrelation werden die Linienwerte 1 bis 9 im **Normierer** auf den Energiewert eins normiert und als Referenzfunktionswerte abgespeichert. In der dargestellten Weise werden im Rahmen der Lernphase Referenzfunktionswerte für alle interessierenden Modulationsarten und für alle vier Parameter bestimmt und abgespeichert. Im unteren Abbildungsteil ist die gleiche Signalverarbeitung dargestellt wie im oberen Teil aber mit kleinerer zugrunde liegender Signalbeobachtungslänge. Das Histogrammergebnis aus nur einem Signalabschnitt entspricht dem, wie es typisch in der Arbeitsphase des Modulationsartenerkenners vorliegt. Durch die vergleichsweise kurze Beobachtungslänge oder auch durch kleinere Signal-Stör-Verhältnisse bedingt, ergibt sich eine rauhere Histogrammform. Das spiegelt sich auch im unten rechts dargestellten Ergebnis nach der **DFT** wieder. Dieses Ergebnis wird ohne Berücksichtigung der Linie beim Abszissenwert 0 im **Normierer** normiert und im **Korrelator** mit allen abgespeicherten Referenzfunktionen korreliert. Die Korrelation mit allen abgespeicherten Referenzfunktionen wird in Abb. 4 oben rechts durch mehrere, auf den **Korrelator** gerichtete Pfeile angedeutet. Aufgrund der Ähnlichkeit der in der Abbildung gezeigten beiden Bildfunktionsausschnitte ergibt sich hierfür ein relativ großes Korrelationsergebnis, welches deutlich auf die Verwandtschaft der beiden zugrunde liegenden Merkmalshistogramme hinweist.

### Literatur

[1] Patentschrift DE 38 34 377 C2: "Verfahren zur automatischen Erkennung und Klassifizierung von digital quadratur-amplituden-modulierten Signalen mit unbekannten Parametern", München, 1990;
[2] J. G. Proakis: "Digital Communications", Third Edition, McGraw-Hill, New York, 1995, S. 191 - 203;
[3] R. D. Gitlin, J. F. Hayes, S. B. Weinstein: "Data Communications Principles", Plenum Press, New York, 1992, S. 368 - 371;
[4] H. Niemann: "Klassifikation von Mustern", Springer-Verlag, Berlin, 1983, S. 15 und S. 195 - 200;
[5] Patentschrift DE 42 43 113 C2: "Verfahren zur automatischen, spektralen Einweisung von Modulationsart-Klassifikatoren", München, 1996;
[6] A. V. Oppenheim, R W. Schafer: "Zeitdiskrete Signalverarbeitung", R. Oldenbourg Verlag, München, 1992, S. 587 - 637;
[7] L. R Rabiner, B. Gold: "Theory and Application of Digital Signal Processing", Prentice-Hall, New Jersey, 1975, S. 119 - 121;
[8] A. Papoulis: "Probability, Random Variables, and Stochastic Processes", Third Edition, McGraw-Hill, New York, 1991, S. 115 - 120;
[9] N. Ahmed, K. R. Rao: "Orthogonal Transforms for Digital Signal Processing", Springer-Verlag, Berlin, 1975, S. 169 - 171 und S. 200 - 224;
[10] H.-H. Bothe: "Neuro-Fuzzy-Methoden", Springer-Verlag, Berlin, 1998;

## Patentansprüche

1. Verfahren zur automatischen Erkennung von Signal-Modulationsarten mit unbekannten Parametern, bei dem aus dem empfangenen, komplex demodulierten, mit einem Tiefpaß gefilterten und digitalisierten Signal fortlaufend die Momentanwerte für Amplitude a und ϕ entnommen und aus letzterer, die Differenzphasenwerte Dϕ und die Frequenzwerte f abgeleitet und daraus, bei Überschreitung vorgegebener Schwellenwerte, Histogramme für Amplitude, Differenzphase und Frequenz angelegt werden, welche, zusammen mit den Größen für Mittelwert und Varianz für Amplitude und Frequenz und mit einer gegebenenfalls hinter einer Betrags-Quadrierung mit nachfolgender Spektrumsbildung festgestellten Schrittakt-Spektrallinie zur Erkennung und Klassifizierung der Signal-Modulationsart des empfangenen Signals herangezogen werden,
**gekennzeichnet durch** die folgenden Verfahrensschritte:
a) Das empfangene komplexe Basisbandsignal wird zusätzlich zur Betrags-Quadrierung noch einer komplexen Quadrierung unterzogen, wobei hinter beiden nichtlinearen Operationen eine Spektrumsbildung vorgenommen wird, um eine gegebenenfalls vorhandene Schrittakt-Spektrallinie aufzufinden, deren Frequenzwert **durch** Kehrwertbildung zum abzuschätzenden Schrittakt-Zeitintervall T führt, welches für die spätere Bestimmung von Differenzphasenwerten in einem Speicher aufbewahrt wird,
b). aus den Signal-Phasenwerten werden zusätzlich zu den Frequenzwerten noch die Werte für die mathematische Ableitung der Frequenz df bestimmt,
c) in einem taktfreien Merkmalsextraktor werden die mathematischen Ableitungen für die vorgenannten Wertefolgen a, Dϕ, f und df gebildet und die relevanten Werte aus a, Dϕ, f und df zu den Zeitpunkten extrahiert, zu denen die Werte der jeweils zugehörigen Ableitungswertefolge vorgegebene Abstandswerte von dem zugeordneten Mittelwert der Ableitungswertefolge für den betrachteten Signalabschnitt nicht überschreiten, wobei das für die Differenzphasenbildung benötigte Zeitintervall T entweder wie unter a) beschrieben oder, falls keine Schrittakt-Spektrallinie entdeckt wurde, mit Hilfe des Kehrwertes der bekannten Signalbandbreite bestimmt wird,
d) nach der Akkumulation der relevanten Werte für a, Dϕ, f und df über einen oder, bei ausreichender Signaldauer, über mehrere Signalabschnitte hinweg und nach Bereichsnormierung mit Hilfe der jeweiligen Mittelwerte und Standardabweichungen und Verarbeitung der relevanten Parameterwerte zu Histogrammen werden aus diesen Histogrammen mittels Digitaler Fourier-Transformation Bildfunktionen bestimmt, die insgesamt oder ausschnittsweise bezüglich der Ordinate normiert und in dieser Form weiterverwendet werden,
e) für vorgegebene Signalproben werden im Rahmen der Lernphase die normierten Bildfunktionen oder Bildfunktionsausschnitte für die vier Parameter a, Dϕ, f und df, die Anzahlen der relevanten Werte der genannten Parameter, Mittelwerte und Standardabweichungen sowie die Parameter von gegebenenfalls festgestellten Schrittakt-Spektrallinien als Referenzwerte für die vorgegebenen Modulationsarten abgespeichert,
f) im Rahmen der Arbeitsphase werden in gleicher Weise gefundene und normierte Bildfunktionen oder Bildfunktionsausschnitte mittels Korrelation oder nach der Methode der kleinsten quadratischen Abweichung mit den vorher gelernten Referenzfunktionen verglichen,
g) die sich für die Bildfunktionen oder Bildfunktionsausschnitte der Parameter a Dϕ, f und df ergebenden Korrelationsergebnisse bzw. quadratischen Abweichungen, die Anzahlen der relevanten Werte der genannten Parameter, ihre Mittelwerte und ihre Standardabweichungen werden unter Beachtung vorgegebener Toleranzbereiche geprüft und daraus, zusammen mit einer hinter der Betragsquadrierung oder der komplexen Quadrierung jeweils mit nachfolgender Spektrumsbildung gegebenenfalls gefundenen Schrittakt-Spektrallinie, auf die aktuell anliegende Modulationsart geschlossen.

2. Verfahren nach Anspruch 1,
**dadurch gekennzeichnet,**
**daß** die sich aus den transformierten Merkmalshistogrammen ergebenden Bildfunktionen oder Bildfunktionsausschnitte mit Hilfe von nichtparametrischen Bewertungsmethoden wie einem Nächster-Nachbar-Klassifikator, einem Künstlichen Neuronalen Netz, einem Entscheidungsnetzwerk mit Fuzzy-Logik oder Kombinationen aus den genannten Methoden ausgewertet werden.

3. Verfahren nach einem der Ansprüche 1 oder 2,
**dadurch gekennzeichnet,**
**daß** die modulationstypischen Histogramme und/oder die daraus mittels der Digitalen Fourier Transformation errechneten Bildfunktionen oder Bildfunktionsausschnitte auf einem Bildschirm angezeigt werden.

4. Verfahren nach einem der Ansprüche 1 bis 3,
**dadurch gekennzeichnet,**
**daß** nach Anzeige von Zwischen- und/oder Endergebnissen, für einen interaktiven Analysebetrieb, eine Änderung von Parametern vorgenommen werden kann.

5. Verfahren nach einem der Ansprüche 1 bis 4,
**dadurch gekennzeichnet,**
**daß** die Arbeitsphase abschnittsweise durch Lernphasen unterbrochen wird.

6. Verfahren nach einem der Anspüche 1 bis 5,
**dadurch gekennzeichnet,**
**daß** der Vergleichsvorgang in der Arbeitsphase, alternativ oder wahlweise, auf fest vorgegebene Referenzfunktionen bezogen ist.

## Claims

1. Method for the automatic recognition of signal modulation types with unknown parameters, wherein the momentary values for amplitude a and phase ϕ are continuously registered from the complex, demodulated, digitised signal received and filtered with a low-pass filter, and wherein the phase-difference values Dϕ and the frequency values f are derived from the latter, and, with reference to these, if predetermined threshold values are exceeded, histograms are created for amplitude, phase difference and frequency, which, together with the parameters for mean value and variance for amplitude and frequency, and with any spectral line for signal-element timing optionally determined after a value squaring with subsequent spectrum formation, are used for the recognition and classification of the signal modulation type of the received signal,
**characterised by** the following procedural stages:
a) in addition to the value squaring, the received complex baseband signal is subjected to another complex squaring, wherein a spectrum formation is implemented after both non-linear operations, in order to locate any spectral line for signal-element timing which may optionally be present, of which the frequency value leads, through reciprocal formation, to the time interval T for the signal-element-timing to be estimated, which is stored in a memory for subsequent determination of phase-difference values,
b) in addition to the frequency values, values for the mathematical derivation of frequency df are also determined from the signal-phase values,
c) the mathematical derivations for the above-named value sequences a, Dϕ, f and df are formed in a clock-free feature extractor, and the relevant values for a, Dϕ, f and df are extracted at those times, at which the values of the associated derived-value sequence do not exceed predetermined deviation values from the allocated mean value of the derived-value sequence for the observed signal portion, wherein the time interval T required for formation of the phase difference is determined either as described under a), or, if no spectral line for signal-element timing has been discovered, using the reciprocal value of the known signal bandwidth,
d) after an accumulation of the relevant values for a, Dϕ, f and df over one signal portion or, in the event of an adequate signal duration, over several signal portions, and after range scaling using the relevant mean values and standard deviations, and processing of the relevant parameter values to form histograms, image functions are determined from these histograms by means of digital Fourier transformation, which are scaled with reference to the ordinate either altogether or in sections and subsequently used in this form,
e) for predetermined signal samples, the scaled image functions or image-function sections for the four parameters a, Dϕ, f and df, the numbers of the relevant values for the named parameters, mean values and standard deviations and the parameters of any spectral lines for signal-element timing optionally determined within the learning phase, are stored as reference values for the predetermined modulation types,
f) within the operational phase, image functions or image-function sections located and scaled in the same manner are compared, either by correlation or using the method of minimum quadratic deviation, with the previously learned reference functions,
g) the correlation results determined for the image functions or image-function sections of the parameters a, Dϕ, f and df and/or quadratic deviations, the numbers of the relevant values for the named parameters, the associated mean values and standard deviations are checked with reference to predetermined tolerance ranges, and from this, together with any spectral line for signal-element timing optionally located after the value squaring or the complex squaring, in each case with subsequent spectrum formation, the current modulation type is inferred.

2. Method according to claim 1,
**characterised in that,** the image functions or image-function sections resulting from the transformed feature histograms are evaluated using non-parametric evaluation methods such as a nearest neighbour classificator, an artificial neuronal network, a decision network with fuzzy logic or combinations of these methods.

3. Method according to any one of claims 1 or 2,
**characterised in that**,
the modulation-type histograms and/or the image functions or image-function sections calculated from these by means of digital Fourier transformation are displayed on screen.

4. Method according to any one of claims 1 to 3,
**characterised in that**,
after the display of intermediate and/or final results, a modification of parameters can be implemented for an interactive analysis mode.

5. Method according to any one of claims 1 to 4,
**characterised in that**,
the operational phase may be interrupted in portions by learning phases.

6. Method according to any one of claims 1 to 5,
**characterised in that**,
the comparison procedure in the operational phase relates, alternatively or optionally, to fixed, predetermined reference functions.

## Revendications

1. Procédé de reconnaissance automatique de types de modulation de signaux avec des paramètres inconnus, dans lequel, à partir du signal reçu, démodulé de manière complexe, filtré avec un filtre passe-bas et numérisé, les valeurs momentanées pour l'amplitude a et la phase ϕ sont prélevées en continu et les valeurs de fréquence dérivées et, lors d'un dépassement de certaines valeurs seuils, des histogrammes sont établis pour l'amplitude, la différence de phase et la fréquence, qui, avec les grandeurs pour la valeur moyenne et la variance pour l'amplitude et la fréquence, et avec une ligne spectrale de rythme d'intervalle déterminée le cas échéant derrière une élévation au carré de la valeur absolue avec une génération de spectre suivante, sont utilisées pour la reconnaissance et la classification du type de modulation du signal reçu,
**caractérisé par** les étapes de procédé suivantes:
a) le signal à bande de base complexe reçu est soumis, en plus d'une élévation au carré de la valeur absolue, à une élévation au carré complexe, moyennant quoi derrière les deux opérations non linéaires, une génération de spectre est effectuée afin de découvrir une ligne spectrale de rythme d'intervalle existante le cas échéant, dont la valeur de la fréquence conduit, par l'intermédiaire de la génération de la valeur inverse, à l'intervalle de temps du rythme d'intervalle T à évaluer, qui est conservé, pour une détermination ultérieure de valeurs de différence de phase, dans une mémoire,
b) à partir des valeurs de phase du signal, en plus des valeurs de fréquence, les valeurs pour la dérivée mathématique de la fréquence df son t déterminées,
c) dans un extracteur de caractéristiques sans rythme, les dérivées mathématiques sont générées pour les suites de valeurs a, Dϕ, f et df et les valeurs importantes de a, Dϕ, f et df sont extraites aux instants où les valeurs de la suite de valeurs dérivées correspondante ne dépassent pas les valeurs de distance prédéterminées de la valeur moyenne correspondante de la suite de valeurs dérivées pour la partie du signal considérée, moyennant quoi l'intervalle de temps T nécessaire pour la génération de la différence de phase est décrit soit au point a) soit, au cas où aucune ligne spectrale de rythme d'intervalle n'a été découverte, déterminé à l'aide de la valeur inverse de la bande passante connue du signal,
d) après l'accumulation des valeurs importantes pour a, Dϕ, f et df sur un ou, dans le cas d'une durée suffisante du signal, sur plusieurs parties du signal et après la normalisation du domaine à l'aide des valeurs moyennes correspondantes, des écarts types et du traitement des valeurs de paramètres importants en histogrammes, sont déterminées, à partir de ces histogrammes à l'aide d'une transformation de Fourier numérique, des fonctions graphiques qui sont normalisées dans l'ensemble ou partiellement en ce qui concerne les ordonnées et utilisées dans cette forme,
e) pour des échantillons de signaux prédéterminés, dans le cadre de la phase d'apprentissage, les fonctions graphiques normalisées ou les parties des fonctions graphiques pour les quatre paramètres a, Dϕ, f et df, les nombres des valeurs importantes des paramètres mentionnés, les valeurs moyennes et les écarts types ainsi que les paramètres de lignes spectrales de rythme d'intervalle sont enregistrées en tant que valeurs de référence pour les types de modulation prédéterminés,
f) dans le cadre de la phase de travail, les fonctions graphiques ou les parties de fonctions graphiques trouvées et normalisées de la même manière à l'aide de corrélation ou selon un procédé de la dérivée quadratique la plus petite, sont comparées avec les fonctions de référence apprises précédemment,
g) les résultats de la corrélation, les nombres des valeurs importantes des paramètres mentionnés, leurs valeurs moyennes et leurs écarts types obtenus pour les fonctions graphiques ou les parties de fonctions graphiques des paramètres a, Dϕ, f et df, sont contrôlés en prenant en compte des domaines de tolérance prédéterminés et le type de modulation en est déduit, en même temps qu'une ligne spectrale de rythme d'intervalle trouvée le cas échéant après l'élévation au carré de la valeur absolue ou l'élévation au carré complexe, avec la génération suivante d'un spectre.

2. Procédé selon la revendication 1, **caractérisé en ce que** les fonctions graphiques ou parties de fonctions graphiques obtenues à partir des histogrammes de caractéristiques transformés sont analysées à l'aide de procédés d'analyse non paramétriques comme un classificateur par le plus proche voisin, un réseau neuronal artificiel, un réseau de décision avec logique floue ou des combinaisons des procédés connus.

3. Procédé selon l'une des revendications 1 ou 2, **caractérisé en ce que** les histogrammes typiques de la modulation et/ou les fonctions graphiques ou parties de fonctions graphiques calculées à partir de ceux-ci à l'aide de la transformation de Fourier numérique sont affichés sur un écran.

4. Procédé selon l'une des revendications 1 à 3, **caractérisé en ce que**, après l'affichage de résultats intermédiaire et/ou finaux, pour une analyse interactive, une modification des paramètres peut être effectuée.

5. Procédé selon l'une des revendications 1 à 4, **caractérisé en ce que** la phase de travail est interrompue partiellement par des phase d'apprentissage.

6. Procédé selon l'une des revendications 1 à 5, **caractérisé en ce que** le processus de comparaison dans la phase de travail est effectué, en variante ou au choix, en par rapport à des fonctions de référence prédéterminées.
